# EUROPÄISCHE PATENTANMELDUNG

(11) **EP 1 511 146 A2**
(43) Veröffentlichungstag der Anmeldung: **02.03.2005**
(21) Anmeldenummer: 04090297.5
(22) Anmeldetag: 26.07.2004
(51) Int. Cl.: H02G 5/06

(54) **Gasisolierte Hochspannungsanlage**

(30) Priorität: 25.08.2003 DE 10339822
(71) Anmelder: Siemens Aktiengesellschaft, 80333 München (DE)
(72) Erfinder: Kieper, Mario, 14612 Falkensee (DE)

(57) **Zusammenfassung**

Die vorliegende Erfindung betrifft eine gasisolierte Hochspannungsanlage (1), insbesondere zur Übertragung von Hochspannung im Bereich über 245 kV, bei der Zumindest ein Innenleiter (2) mittels Isolatoren (3) in einem rohrförmigen Außenleiter (4) abgestützt ist, wobei die Isolatoren einerseits am Innenleiter und andererseits am Außenleiter mittels einer ersten Außenelektrode (5) und einer zweiten Außenelektrode (6) fixiert sind. Mindestens ein Isolator (3) ist scheibenförmig ausgeführt und zum Innenleiter (2) hin mit einer eingegossenen Steuerelektrode (7) mit im wesentlichen pilzförmigen Querschnitt verbunden. Mit der Erfindung wird es möglich, eine funktionssichere Hochspannungsanlage kostengünstig bei einem vergleichsweise sehr geringen Außenumfang des Außenleiters bereit zu stellen.

## Beschreibung

Die vorliegende Erfindung betrifft eine gasisolierte Hochspannungsanlage.

Derartige Anlagen werden beispielsweise abschnittsweise vorgefertigt, die vorgefertigten Abschnitte zu einer Trasse transportiert und dann an oder in der Trasse durch Schweißen, mittels Steckverbindungen oder mittels Flanschverbindungen miteinander verbunden. Die einzelnen vorgefertigten Abschnitte bestehen aus einem oder mehreren rohrförmigen Innenleitern und einem ebenfalls rohrförmigen Außenleiter. Der bzw. die Innenleiter werden mit Hilfe von Isolatoren im Außenleiter gehalten. Derartigen Stützisolatoren können zusätzlich der Abschottung von Anlagenabschnitten oder - durch eine entsprechende Formgebung - eine axiale Gasströmung ermöglichen.

So ist in der gattungsbildenden DE 197 25 311 A1 eine gasisolierte Hochspannungsanlage vorgesehen, bei der zumindest ein Innenleiter mittels Isolatoren in einem rohrförmigen Außenleiter abgestützt ist, wobei die Isolatoren einerseits am Innenleiter und andererseits am Außenleiter fixiert sind. Die Fixierung am Außenleiter erfolgt hier zwischen einer ersten ringförmigen Außenelektrode und einer zweiten ringförmigen Außenelektrode.

Bei den gattungsgemäßen Anlagen ist es sehr wichtig, dass zwischen dem Innen- und dem Außenleiter eine einwandfreie elektrische Isolation gegeben ist, da bereits Teilentladungen bei den beträchtlichen Potentialdifferenzen zwischen Innen- und Außenleitern zumindest zu Funktionsbeeinträchtigungen führen können. Es hat sich im Stand der Technik herausgestellt, dass durch eine Vergrößerung des Ringraums zwischen Innenleiter und Außenleiter sowie eine trichterförmige Anordnung der Isolatoren die Gefahr von Teilentladungen erheblich gemindert werden kann.

Nachteilig hieran ist jedoch, dass durch die großen Ringräume die meist aus Aluminium gefertigten Außenleiter eine sehr hohe Masse aufweisen und daher in Herstellung und Transport sehr kostenintensiv sind. Dies gilt auch für die aus teuren Gießharzen zu fertigenden trichterförmigen Isolatoren, welche zur Sicherstellung homogener dielektrischer Eigenschaften sehr aufwendig produziert werden müssen.

Der vorliegenden Erfindung liegt daher die Aufgabe zugrunde, eine gasisolierte Hochspannungsanlage zu schaffen, welche kleinbauend und kostengünstig ist und trotzdem Funktionsbeeinträchtigungen durch unerwünschte Entladungen so weit wie möglich ausschließt.

Diese Aufgabe wird durch eine gasisolierte Hochspannungsanlage nach Anspruch 1 gelöst.

Dadurch, dass bei einer gattungsgemäßen gasisolierten Hochspannungsanlage mindestens ein Isolator eben scheibenförmig ausgeführt ist und der Isolator zum Innenleiter hin mit einer eingegossenen Steuerelektrode mit im wesentlichen pilzförmigem Querschnitt verbunden ist, wobei diese Steuerelektrode an einem querschnittsverringerten Bereich des Innenleiters verklemmbar ist, wird diese Aufgabe gelöst.

Hierbei stellt der eben scheibenförmige Isolator sicher, dass volumenmäßig ein Minimum an Material für den Isolator aufgewendet werden muss und hierdurch die Kosten insbesondere in der Serienherstellung gering bleiben.

Durch die besondere Konstruktion der pilzförmigen Steuerelektrode, welche in einem querschnittsverringerten Bereich des Innenleiters verklemmbar ist sowie der Gestaltung der beiden am Außenleiter angeordneten Außenelektroden ist außerdem eine Gestaltung des elektrischen Feldes derart möglich, dass die elektrischen Feldlinien im wesentlichen parallel und mit möglichst großem Abstand selbst im Bereich der Isolatoren herstellbar sind, so dass sich die Gefahr von Entladungen verringert.

Hierzu sind die beiden Außenleiter vorzugsweise gleichmäßig ringförmig zu gestalten und zwar mit einer gerundeten Innenkontur. Hierzu korrespondierend ist auch der Bereich um den Innenleiter herum zu gestalten. Hierzu ist die zu dem Innenleiter hin orientierte Steuerelektrode an einem querschnittsverringerten Bereich des Innenleiters verklemmbar. Das heißt, dass durch den "Pilzkopf" der im Querschnitt pilzförmigen Steuerelektrode eine "Überbrückung" des querschnittsverringerten Bereichs des Innenleiters möglich ist und sich in Achsrichtung zu beiden Seiten hin die Kontur des Innenleiters harmonisch bzw. im wesentlichen tangential auf den "Pilzkopf" zuläuft. Hierbei ist es besonders vorteilhaft, dass die Steuerelektrode im Bereich der Stirnflächen eines zweigeteilten Innenleiters verklemmbar ist, z.B. durch Schrauben. Hierbei fließt der Hauptstrom über die stirnseitigen Enden der Innenleiterabschnitte durch den "Fuß" des Pilzes hindurch. Dies ermöglicht zum einen eine sehr einfache Montierbarkeit und gewährleistet außerdem, dass mit einfach herzustellenden und leichten Bauteilen gearbeitet werden kann, welche leicht vor Ort zusammen gefügt werden können.

Mit der vorliegenden Erfindung wird somit ein scheibenförmiger Stützisolator mit gutem Trackingverhalten, einer hohen Dauergebrauchstemperatur, dielektrischen und mechanischen Dauerfestigkeit insbesondere für einpolig gekapselte Anlagen mit einer Betriebsspannung von z.B. 420 kV bereitgestellt, welcher die hier üblichen konischen Isolatoren ersetzt. Der scheibenförmige Stützisolator mit eingegossener Steuerelektrode ist so gestaltet, dass trotz relativ geringem Außendurchmesser und kleiner Gießharzmasse hohe dielektrische Stehspannung und ausreichende mechanische Eigenschaften erreicht werden. Vorteile liegen hierbei in einer Reduzierung der Herstellkosten für Isolator und Leiteranschlussteile, hohen dielektrischen Stehspannungen trotz kleinem Außendurchmesser, hoher mechanischer Festigkeit (bezüglich zulässiger Axialkräfte und Umbruchmomente) und dem verhältnismäßig kleinen Außendurchmessers des Isolators.

Vorteilhafte Weiterbildungen der Erfindung werden im Folgenden beschrieben.

Eine vorteilhafte Weiterbildung der Erfindung sieht vor, dass der Versatz in Achsrichtung des eben scheibenförmigen Isolators zwischen der Mitte der Innenrandfläche und der Mitte der Außenrandfläche weniger als ein Viertel der maximalen Ausdehnung des Isolators in Achsrichtung beträgt. Hierdurch hebt sich der Isolator deutlich von den "trichterförmigen" bekannten Stützisolatoren ab. In der Praxis ist es vorzugsweise sogar so, dass der Isolator bezüglich der zur Achsrichtung senkrechten Ebene im wesentlichen spiegelsymmetrisch ausgeführt ist (abgesehen von kleinen Bohrungen zur Verdrehsicherung etc., welche die Grundform des Isolators jedoch nicht wesentlich tangieren). Hierdurch ist sicher gestellt, dass der Isolator volumenmäßig möglichst klein und somit kostengünstig gehalten werden kann.

Eine weitere vorteilhafte Weiterbildung sieht vor, dass die Oberflächen des Isolators zumindest im Querschnitt bereichsweise gekrümmt sind. Hierdurch kommt es zu einer leichten Kriechwegverlängerung zwischen Innenleiter und Außenleiter, eine geringere Feldbeeinflussung kann gesteuert werden, weniger Material ist zum Aufbau des Isolators notwendig. Die Krümmung kann auch auf die Lage des Tripelpunktes (d.h. des Punktes, an dem Steuerelektrode, Gießharz und Gasfüllung aufeinander treffen) abgestimmt sein.

Eine weitere vorteilhafte Weiterbildung sieht vor, dass der Isolator im radialen Außenbereich eine zweite Steuerelektrode aufweist. Dies ist nicht unbedingt notwendig, da durch die Konturierung der ersten und zweiten Außenelektrode ein bereits sehr homogenes Feld aufgebaut werden kann. Hierbei ist auch zu beachten, dass das Einbringen einer weiteren Steuerelektrode im radialen Außenbereich kostenaufwendig ist, zur Gewährleistung höchster Feldhomogenitäten kann dies jedoch trotzdem vorteilhaft sein.

Eine weitere vorteilhafte Weiterbildung sieht vor, dass der Isolator aus einem dielektrisch homogenen Material besteht, etwa aus einschlägig zu verwendenden Gießharzen.

Eine weitere vorteilhafte Weiterbildung sieht vor, dass der Isolator mit radialem und axialem Spiel zwischen den Außenelektroden angeordnet ist und eine Verdrehsicherung gegenüber diesen aufweist. Hierdurch wird gewährleistet, dass - insbesondere bei nicht gasdichten "Stützisolatoren" - eine hohe mechanische und Temperaturwechselfestigkeit besteht. Ein solcher Stützisolator hat regelmäßig Öffnungen für den Gasdurchlass in axialer Richtung. Selbstverständlich ist es auch möglich, den erfindungsgemäßen Isolator als im wesentlichen gasdichten "Schottungsisolator" vorzusehen, wobei sich hier wegen der erschwerten Abdichtung spielfreie Fixierungen eher empfehlen.

Eine weitere vorteilhafte Weiterbildung sieht vor, dass die zum Innenleiter hin angeordnete Steuerelektrode eine umlaufende Nut zur Einfassung eines Dichtrings aufweist zum gasdichten Verklemmen der Steuerelektrode mit dem Innenleiter. Diese Konstruktion biete sich hauptsächlich an bei den oben erwähnten "Schottungsisolatoren", um eine möglichst optimale Gasdichtheit zu gewährleisten.

Von zentraler Wichtigkeit für die Erfindung ist die Ausbildung der in den Isolator eingegossenen Steuerelektrode. Hierzu ist es vorteilhaft, diese Steuerelektrode radial innen mit einem im wesentlichen zylinderringförmigen, d.h. im Querschnitt rechteckigen "Pilzfuß" vorzusehen, welcher dann radial außenseitig mit einer Verbreiterung versehen ist (dem "Pilzkopf"). Der Pilzkopf weist hierbei eine im wesentlichen kantenfreie Kontur auf in seinem Querschnitt. Hierdurch ist die Steuerelektrode zunächst einmal sehr leicht und klein herzustellen und mit dem Isolator zusammen leicht transportabel und montierbar. Zum anderen bewirkt der radial innenseitig angeordnete Zylinderring auch noch ein "Verdrehen" der anzukoppelnden Innenleiter an die Steuerelektrode. Dies ist insbesondere gut möglich, wenn der Innenleiter zumindest zweigeteilt ist und dieser zylinderringförmige Abschnitt zwischen zwei Stirnflächen der Innenleiterabschnitte eingebracht und durch Verschrauben der Innenleiterabschnitte fixiert wird.

Hierbei ist es vorteilhaft, wenn die sich an den Innenleiter seitlich (mit Abstand) anschließenden Innenleiterteile in ihrer Kontur z.B. auf die Pilzkopfform abgestimmt sind. So können diese Innenleiterabschnitte in ihrem stirnseitigen Bereich z.B. Verdickungen oder allmähliche Verjüngungen aufweisen, um eine gleichmäßige Kontur im Bereich des Stützisolators zu erreichen.

Eine weitere vorteilhafte Weiterbildung sieht vor, dass die erste und die zweite Außenelektrode innerhalb der Innenkontur des Außenleiters angeordnet sind. Unter "Innenkontur" wird hier der "ungekröpfte" Normalquerschnitt im Inneren des Außenleiters benannt. Es ist somit nicht mehr nötig, technisch aufwendige (und für die Montage extrem toleranzaufwendige) Außenflansche vorzusehen, in welche die radial den Durchmesser des Außenleiters übersteigenden Isolatoren eingebracht werden müssen. Es ist somit möglich, einfache Rohre als Außenleiter zu verwenden, in welche lediglich Ringe zur Fixierung des Isolators vorgesehen werden müssen. Hierzu ist es vorteilhaft, dass erste und zweite Außenelektrode miteinander verschraubt sind, vorzugsweise in einem Durchmesserbereich, der größer ist als der Innendurchmesser der Außenelektroden, um so die zu dem Innenleiter hin gerichtete Kontur der Außenelektroden nicht zu beeinträchtigen. Hierzu ist es z.B. möglich, dass die ersten Außenelektrode ein innerhalb des Innendurchmessers des Außenleiters eingeschrumpfter, eingeschweißter oder eingelöteter Ring ist oder ein fester Bestandteil des Außenleiters (hierbei wird z.B. bei Eckverbindern die erste Außenelektrode in einem z.B. Aluminiumgussteil integral hergestellt).

Der hier gezeigte Aufbau empfiehlt sich insbesondere für modular aufzubauende Strukturen. So kann der Außenleiter einfach modular aufgebaut sein aus einfachen Rohren bzw. Eckverbindern, welche z.B. zusammengeschweißt werden.

Auch der Innenleiter kann vorzugsweise modular aufgebaut sein, wobei die einzelnen Innenleitermodule aus mehreren Teilen bestehen können. Hierdurch wird es möglich, dass ein Innenleitermodul jeweils einen "Fixierbereich" zum Einklemmen der Steuerelektrode aufweist. Es ist insbesondere vorteilhaft, wenn die Innenleitermodule einzeln ineinander steckbar sind. Hierzu weist das eine Ende des Innenleiters regelmäßig einen verringerten Durchmesser zu dem anderen Ende des Innenleiters auf, so dass diese benachbart ineinander steckbar sind. Es empfiehlt sich hierbei zur Vergleichmäßigung des elektrischen Feldes im Bereich des Isolators, dass ein Endteil mit verringertem Querschnitt in seinem Grenzbereich zu einem Isolator hin eine Verdickung aufweist und das sich auf der anderen Seite des Isolators anschließende Stück des Innenleiters zu dem Isolator hin eine allmähliche Verjüngung aufweist, so dass sich insgesamt eine sehr gleichmäßige Kontur und somit Feldsteuerung ergibt.

Vorteilhafterweise hat der Innenleiter einen Durchmesser zwischen 5 cm und 20 cm, besonders vorzugsweise zwischen 15 cm und 20 cm Durchmesser. Der Innendurchmesser des Außenleiter beträgt hierbei vorzugsweise 30 cm bis 80 cm, besonders vorzugsweise 40 cm bis 60 cm. Eine solche Anlage ist geeignet, Potentialdifferenzen zwischen Innen- und Außenleiter von vorzugsweise 245 kV bis 550 kV, besonders vorzugsweise 420 kV bis 550 kV im Betrieb sicher zu stellen.

Die vorliegende Erfindung wird nun anhand mehrerer Figuren erläutert. Es zeigen
- Figur 1: einen Längsabschnitt einer erfindungsgemäßen gasisolierten Hochspannungsanlage und
- Figur 2: einen Eckabschnitt einer erfindungsgemäßen gasisolierten Hochspannungsanlage.

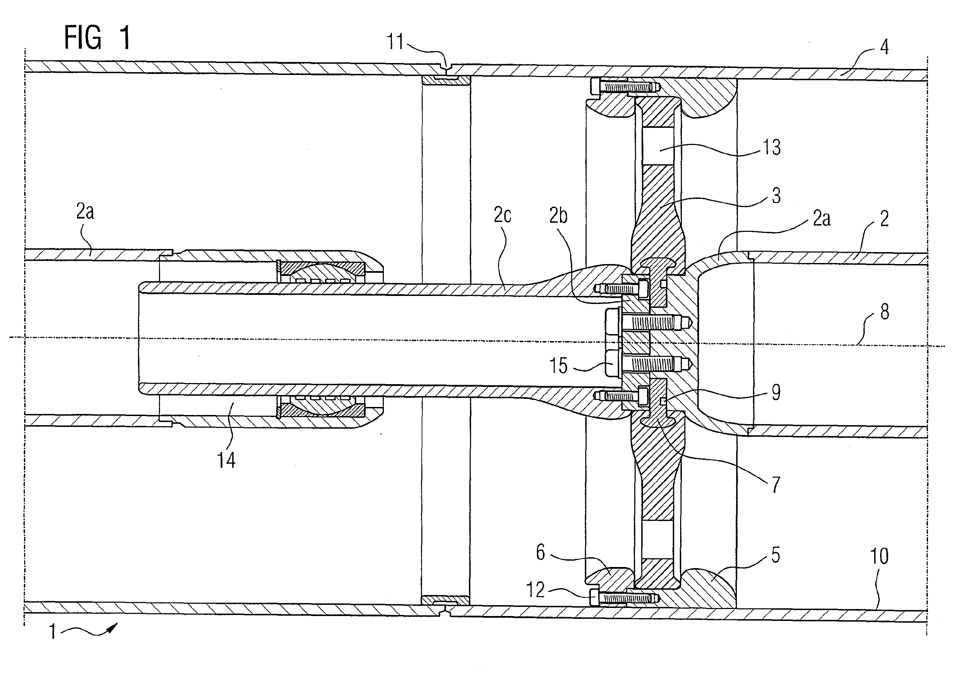

Figur 1 zeigt eine erfindungsgemäße gasisolierte Hochspannungsanlage 1. Diese ist insbesondere zur Übertragung von Hochspannungen im Bereich über 250 kV ausgelegt, d.h. dass die Potentialdifferenz zwischen einem längsgestreckten Innenleiter 2 und einem Außenleiter 4 insgesamt über 245 kV betragen kann. Der Innenleiter 2 ist mittels Isolatoren 3 in dem rohrförmigen Außenleiter 4 abgestützt, wobei die Isolatoren einerseits am Innenleiter und andererseits am Außenleiter mittels einer ersten Elektrode 5 und einer zweiten Elektrode 6 fixiert sind. Der Außenleiter ist aus Rohrmodulen zusammengesetzt, welche sich an Schnittstellen 11 aneinander fügen. Die Rohre sind vorzugsweise aus Aluminium (auch die Innenleiter sowie sämtliche der hier beschriebenen Elektroden, soweit nichts anderes erwähnt ist, sind vorzugsweise aus Aluminium zu fertigen).

Der Isolator 3 ist eben scheibenförmig ausgeführt, im vorliegenden Fall ist der Idealfall gegeben, dass der Isolator 3 bezüglich der zur Achsrichtung 8 senkrechten Ebene im wesentlichen spiegelsymmetrisch ausgeführt ist (diese Spiegelsymmetrie bezieht sich hier primär auf die für Feldlinien entscheidende Formgebung, kleine Markierungen bzw. Bohrungen im Randbereich etwa zur Verdrehsicherung, müssen nicht zwangsweise spiegelsymmetrisch ausgeführt sein). In jedem Falle beträgt jedoch der Versatz in Achsrichtung 8 des Isolators 3 zwischen der Mitte der Innenrandfläche und der Mitte der Außenrandfläche weniger als das 0,25-fache der maximalen Ausdehnung des Isolators in Achsrichtung 8. Radial außenseitig ist der Isolator 3 zwischen der Elektrode 5 und der Elektrode 6 mit einem kleinen radialen und axialen Spiel (etwa 5/10 mm) verdrehgesichert gehalten. Die erste Außenelektrode 5 ist fest an der Innenkontur 10 des Außenleiters angebracht, etwa durch Einschrumpfen oder durch Einschweißen bzw. Einlöten.

Es ist besonders vorteilhaft, dass diese erste Elektrode 5 innerhalb der durchlaufenden Innenkontur (d.h. eines ungekröpften Querschnitts) des Außenleiters verläuft. Es ist also nicht notwendig, im Bereich des Isolators eine Querschnittserweiterung vorzusehen, welche z.B. Außenflansche notwendig machen würde, welche mit einem erhöhten Aufwand zu dichten bzw. bei den nötigen Toleranzen zu fertigen wären. Die zweite Außenelektrode 6, welche ebenso wie die erste Außenelektrode 5 ringförmig ist, wird in axialer Richtung 8 mit der ersten Außenelektrode verschraubt und zwar vorzugsweise in einem Durchmesserbereich, der größer ist als der Innendurchmesser der kleinsten Außenelektrode. So ergibt sich die in Figur 1 gezeigte Form, in der der radiale Außenrand des Isolators 3 mit dem gewünschten Spiel in axialer Richtung durch die Schraube 12 fixiert wird. Somit wird es möglich, die erste Außenelektrode 5 und die zweite Außenelektrode 6 vollständig innerhalb der Innenkontur des Außenleiters anzuordnen. Der Isolator 3 besteht aus einem dielektrisch homogenen Material, in diesem Falle einem Gießharz. Der Isolator weist Durchgangsöffnungen 13 auf, um das zwischen Außen- und Innenleiter mit Druck eingefüllte Gas in Achsrichtung 8 durch die Ebene des Isolators zu leiten. Es handelt sich also hier um einen mit Öffnungen 13 für den Gasdurchlass versehenen Stützisolator. Selbstverständlich ist es auch möglich, einen im wesentlichen gasdichten Schottungsisolator ohne Öffnungen vorzusehen, welcher z.B. im Endbereich der Anlage bzw. zur Bildung von geschlossenen Abschnitten verwendet werden kann. Hierzu kann in der umlaufenden Nut 9 ein Dichtring eingesetzt werden.

Der vorliegende Isolator 3 weist in seinem radialen Außenbereich keine eingegossene Steuerelektrode auf, welche der Feldbeeinflussung dienen könnte. Dies ist jedoch optional möglich. Die Oberflächen des Isolators 3 sind im Querschnitt zumindest bereichsweise gekrümmt, um einerseits eine Kriechwegverlängerung zwischen Innen- und Außenleiter zu erreichen und außerdem um sicherzustellen, dass das Volumen des Isolators möglichst klein gehalten werden kann. Der Isolator 3 ist radial innenseitig mit einer in den Isolator z.B. eingegossenen Steuerelektrode 7 verbunden, welche einen im wesentlichen pilzförmigen Querschnitt aufweist und wobei die Steuerelektrode an einem querschnittsverringertem Bereich des Innenleiters verklemmbar ist. Der in Figur 1 gezeigte Innenleiter weist wiederum einen modularen Aufbau auf. Der Innenleiter 2 enthält die Bauteile 2a, 2b und 2c.

Im folgenden soll insbesondere der rechtsseitige Innenleiter 2 an seiner Schnittstelle zum Isolator beschrieben werden. Die Steuerelektrode 7 ist im wesentlichen zylinderringsförmig mit einer radial außenseitigen Verbreiterung in Form eines "Pilzkopfes" ausgeführt. Hierdurch wird die Steuerelektrode, wie eingangs bereits ausführlich geschildert, sehr leicht und klein und mit dem Isolator zusammen leichter transportabel. Die Steuerelektrode wird in einem Fixierbereich des rechtsseitigen Moduls des Innenleiters 2 fixiert und zwar durch ein Verklemmen zwischen den Abschnitten 2a und 2b. Der Innenleiter ist also quasi in diesem Bereich zweigeteilt und weist eine erhebliche Querschnittsverringerung auf, in welcher die Steuerelektrode verklemmbar (hier mit Schraubverbindungen verklemmbar) ist. Die Verklemmung der Steuerelektrode findet hierbei in dem zylinderringsförmigen Bereich statt, so dass die Stirnflächen der Abschnitte 2a und 2b einen Druck auf die entsprechenden Seitenflächen der Steuerelektrode aufweisen und somit auch der Stromfluss hauptsächlich über diesen Abschnitt der Steuerelektrode erfolgen kann.

Wie bereits eingangs ausgeführt, stellt somit das Ensemble aus Innenleiter und Steuerelektrode sicher, dass eine optimale Steuerung des elektrischen Feldes im Bereich zwischen Innenleiter und Außenleiter gegeben ist. Hierzu werden einerseits die Konturen der Außenelektroden 5 und 6 und andererseits die Konturen der Steuerelektrode sowie der benachbarten Abschnitte des Innenleiters (2a, 2b und 2c) gestaltet. Dadurch dass es sich hierbei jeweils auf beiden Seiten (d.h. innenleiter- und außenleiterseitig) um "abgeflachte" und "gerundete" Konturen handelt, welche zueinander korrespondierend gestaltet sind, kann der Abstand der elektrischen Feldlinien so groß wie möglich gehalten werden und daher die Gefahr von Teilentladungen im Betrieb minimiert werden.

Im vorliegenden Falle ist das Ineinanderstecken der einzelnen Module des Innenleiters 2 so gestaltet, dass die Innenleitermodule rechtsseitig einen größeren Querschnitt haben als linksseitig, so dass diese dann, wie in Figur 1, Schnitt 14 zu sehen, ineinander gesteckt werden können. Zur Erzielung der oben genannten feldstärkeoptimierten Kontur wird der querschnittsverringerte linke Bereich 2c an seinem rechten Ende verdickt und der sich rechtsseitig an die Steuerelektrode 7 anschließende Abschnitt 2a zu der Steuerelektrode hin allmählich verjüngt, so dass insgesamt ein allmählicher Übergang auftritt und insofern die Durchmesserdifferenz im Bereich des Abschnitts 14 möglichst "allmählich" überbrückt wird, um hier keine Sprungstellen zu schaffen, welche die Gefahr von Teilentladungen erhöhen könnte.

Die Montage des in Figur 1 gezeigten Anlagenabschnittes kann wie folgt bewerkstelligt werden. Zunächst wird das rechtsseitige Modul des Außenleiters zur Montagestelle gebracht und die Außenelektrode 5 (eventuell schon vorgefertigt) hierin fixiert. Die spätere Fixierung des radialen Außenbereiches des Isolators 3 erfolgt dann durch Verschraubung der Teile 5 und 6 mittels mehrerer über den Umfang verteilter Schrauben 12. Im Bereich des Innenleiters wird das rechtsseitige Teil 2a des rechten Innenleitermoduls in Position gebracht und an die Steuerelektrode 7 rechtsseitig angebracht. Anschließend erfolgt ein linksseitiges Heranführen des Abschnittes 2c, an welchen schon der Abschnitt 2b über mehrere über den Umfang verteilte Schrauben angeschraubt ist. Anschließend erfolgt eine Verschraubung der Abschnitte 2a, 2b und 2c über mehrere über den Umfang verteilte Schrauben 15, so dass der Isolator bzw. die in ihn eingegossene Steuerelektrode 7 fixiert ist. Ein gravierender Vorteil der Erfindung besteht darin, dass vor Festziehen der Schrauben 15 noch eine Drehung der Innenleiterabschnitte 1a bzw. 2b und 2c möglich ist. Die Anordnung zeichnet sich außerdem durch besondere mechanische Festigkeit in diesem Bereich aus. Das Anziehen der Schrauben 15 erfolgt stets durch den linksseitigen Offenbereich des Abschnitts 2c. Nach Beendigung der Montage in den Bereichen um den Isolator kann das linksseitige Innenleitermodul bzw. das linksseitige Außenleitermodul aufgesteckt und fixiert werden.

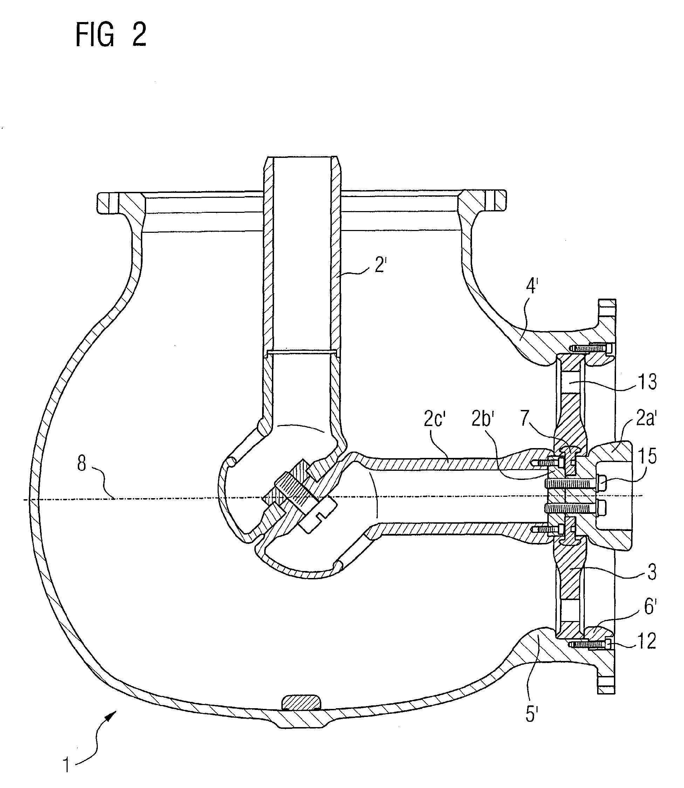

Figur 2 zeigt einen anderen Abschnitt der erfindungsgemäßen Hochspannungsanlage 1. Sämtliche mit gleichen Bezugszeichen bezeichneten Teile sind identisch zu dem den bereits in Figur 1 ausführlich beschriebenen. Bei Teilen, welche eine leicht andere Form haben, wurde durch Kennzeichnung mit einem Apostroph die Abwandlung angedeutet.

In Figur 2 handelt es sich um einen Abschnitt, welcher einen 90°-Versatz der gasisolierten Hochspannungsanlage 1 gewährleistet.

Der Isolator 3 ist hierbei identisch aufgebaut wie in Figur 1. Die radial außenseitige Anbindung des Isolators an das Eckgehäuse des Außenleiters erfolgt hier wiederum über zwei Ringelektroden, wobei die erste Ringelektrode 5' jedoch integral in einen Aluminiumgusskörper eingearbeitet ist und die zweite Außenelektrode 6' mit diesem Gusskörper mittels einer Schraube 12 verschraubt wird. Bezüglich der Gestaltung der Konturen der Elektroden gilt sinngemäß das zu Figur 1 gesagte. Rechtsseitig schließt sich in Figur 2 an den Gusskörper über einen Flansch ein weiterer Abschnitt des Außenleiters an.

Radial innenseitig ist die Steuerelektrode 7 (welche dieselbe Form wie in Figur 1) nach innen mit einem Zylinderring radial hineinragend mit dem Innenleiter 2' verbunden. Hierbei ist wiederum ein Fixierbereich aus Abschnitten 2a', 2b' und 2c' gegeben, wobei der mechanische Aufbau leicht modifiziert ist. Bezüglich der Gestaltung der Konturen des Abschnittes 2c', 2a' und 2b' im Bereich um die Steuerelektrode 7 herum gilt jedoch das für Figur 1 zu den Abschnitten 2a, 2b und 2c gesagte.

Es ist also auch in Figur 2 eine gasisolierte Hochspannungsanlage, insbesondere zur Übertragung von Hochspannung im Bereich über 245 kV gezeigt, bei der ein Innenleiter 2' mittels Isolatoren 3 in einem zumindest bereichsweise rohrförmigen Außenleiter 4' abgestützt ist, wobei die Isolatoren einerseits am Innenleiter und andererseits am Außenleiter mittels einer ersten Außenelektrode 5' und einer zweiten Außenelektrode 6' fixiert sind. Mindestens ein Isolator 3 ist eben scheibenförmig ausgeführt und der Isolator zum Innenleiter 2' hin mit einer eingegossenen Steuerelektrode 7 mit im wesentlichen pilzförmigen Querschnitt verbunden, wobei die Steuerelektrode an einem querschnittsverringerten Bereich des Innenleiters 2' verklemmbar ist. Bezüglich sämtlicher Weiterbildungen wird ausdrücklich auf die Beschreibungseinleitung bzw. auf die Beschreibung zu Figur 1 verwiesen. Sofern dort nicht ausdrücklich die Eignung eines Merkmales für die Figur 2 oben ausgeschlossen wurde, wird hierauf ausdrücklich Bezug genommen.

## Patentansprüche

1. Gasisolierte Hochspannungsanlage (1), insbesondere zur Übertragung von Hochspannungen im Bereich über 245 kV, bei der zumindest ein Innenleiter (2) mittels Isolatoren (3) in einem rohrförmigen Außenleiter (4) abgestützt ist, wobei die Isolatoren einerseits am Innenleiter und andererseits am Außenleiter mittels einer ersten ringförmigen Außenelektrode (5) und einer zweiten ringförmigen Außenelektrode (6) fixiert sind,
**dadurch gekennzeichnet,**
**dass** mindestens ein Isolator (3) eben scheibenförmig ausgeführt ist und
der Isolator zum Innenleiter (2) hin mit einer eingegossenen Steuerelektrode (7) mit im wesentlichen pilzförmigem Querschnitt verbunden ist, welche an einem querschnittsverringerten Bereich des Innenleiters verklemmbar ist.

2. Anlage nach Anspruch 1, **dadurch gekennzeichnet, dass** der Isolator (3) bezüglich der zur Achsrichtung (8) senkrechten Ebene im wesentlichen spiegelsymmetrisch ausgeführt ist.

3. Anlage nach einem der vorhergehenden Ansprüche, **dadurch gekennzeichnet, dass** die Oberflächen des Isolators (3) zumindest im Querschnitt bereichsweise gekrümmt sind.

4. Anlage nach einem der vorhergehenden Ansprüche, **dadurch gekennzeichnet, dass** der Isolator (3) im radialen Außenbereich eine zweite Steuerelektrode aufweist.

5. Anlage nach einem der vorhergehenden Ansprüche, **dadurch gekennzeichnet, dass** der Isolator (3) aus einem dielektrisch homogenen Material besteht.

6. Anlage nach einem der vorhergehenden Ansprüche, **dadurch gekennzeichnet, dass** der Isolator (3) mit radialem und axialem Spiel zwischen den Außenelektroden (5, 6) angeordnet ist und eine Verdrehsicherung gegenüber diesen aufweist.

7. Anlage nach einem der vorhergehenden Ansprüche, **dadurch gekennzeichnet, dass** der Isolator (3) als im wesentlichen gasdichter Schottungsisolator oder als mit Öffnungen (13) für den Gasdurchlass versehener Stützisolator ausgeführt ist.

8. Anlage nach einem der vorhergehenden Ansprüche, **dadurch gekennzeichnet, dass** die zum Innenleiter (2) hin angeordnete Steuerelektrode eine umlaufende Nut (9) zur Einfassung eines Dichtringes aufweist zum gasdichten Verklemmen der Steuerelektrode mit dem Trennleiter (2).

9. Anlage nach einem der vorhergehenden Ansprüche, **dadurch gekennzeichnet, dass** die zum Innenleiter (2) hin angeordnete Steuerelektrode (7) im wesentlichen zylinderringförmig mit einer radial außenseitigen Verbreiterung ausgeführt ist.

10. Anlage nach einem der vorhergehenden Ansprüche, **dadurch gekennzeichnet, dass** die erste (5) und die zweite (6) Außenelektrode innerhalb des Innenkontur (10, 10') des Außenleiters angeordnet sind.

11. Anlage nach einem der vorhergehenden Ansprüche, **dadurch gekennzeichnet, dass** die erste (5) und zweite (6) Außenelektrode miteinander verschraubt sind.
